# EUROPÄISCHE PATENTSCHRIFT

(11) **EP 2 651 790 B1**
(45) Veröffentlichungstag und Bekanntmachung des Hinweises auf die Patenterteilung: **08.03.2017**
(21) Anmeldenummer: 11775779.9
(22) Anmeldetag: 26.10.2011
(51) Int. Cl.: B65G 15/36

(54) **FÖRDERGURT MIT EINEM ZUGTRÄGER AUS STAHL-ARAMID-HYBRIDSEILEN**
CONVEYOR BELT WITH A TENSION CARRIER CONSISTING OF STEEL-ARAMID HYBRID CABLES
COURROIE DE CONVOYEUR DOTÉE D'UN SUPPORT DE TRACTION CONSTITUÉ DE CÂBLES HYBRIDES EN ACIER-ARAMIDE

(30) Priorität: 14.12.2010 DE 102010061201
(43) Veröffentlichungstag der Anmeldung: 23.10.2013
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Preusser, Andrea
(86) Internationale Anmeldenummer: PCT/EP2011/068704
(87) Internationale Veröffentlichungsnummer: WO 2012/079820

(56) Entgegenhaltungen:
- EP-A2- 0 126 965
- FR-A- 1 131 386
- GB-A- 991 767
- GB-A- 2 048 773

## Beschreibung

Die Erfindung betrifft einen Fördergurt mit einer tragseitigen und laufseitigen Deckplatte aus jeweils einem polymeren Werkstoff mit elastischen Eigenschaften sowie einem eingebetteten Zugträger in Form von in Fördergurtlängsrichtung parallel verlaufenden Seilen, wobei der Fördergurt über seine gesamte Breite hinweg zwei Randbereiche und einen Mittenbereich umfasst.

Solch ein Fördergurt wird insbesondere in folgenden Druckschriften detailliert beschrieben:
DE 25 20 943 A1
DE 25 32 190 A1
DE 38 01 120 A1
DE 43 33 839 A1
DE 44 36 042 A1
EP 0 336 385 A1
EP 0 753 471 A1
WO 2008/034483 A1

Die tragseitige und laufseitige Deckplatte bestehen zumeist aus einer Kautschukmischung, enthaltend eine Kautschukkomponente oder einen Kautschukkomponentenverschnitt, ein Vernetzungsmittel oder ein Vernetzungssystem, umfassend ein Vernetzungsmittel und einen Beschleuniger, sowie zumeist weitere Mischungsingredienzien, insbesondere einen Füllstoff und/oder ein Verarbeitungshilfsmittel und/oder ein Alterungsschutzmittel und/oder einen Weichmacher und/oder sonstige Zusatzstoff (z.B. Fasern, Farbpigmente). Die diesbezügliche Kautschukbasis ist insbesondere:
Naturkautschuk (NR)
Butadien-Kautschuk (BR)
Chloropren-Kautschuk (CR)
Styrol-Butadien-Kautschuk (SBR)
Nitrilkautschuk (NBR)
Butylkautschuk (IIR)
Ethylen-Propylen-Kautschuk (EPM)
Ethylen-Propylen-Dien-Kautschuk (EPDM)
SBR/NR-Verschnitt
SBR/BR-Verschnitt
NR/BR-Verschnitt

Von besonderer Bedeutung war bislang CR, das sich durch eine hohe Flamm-, Witterungs- und Alterungsbeständigkeit auszeichnet, insbesondere für Fördergurte mit Einsatz im Untertagebergbau. Heute kommt der Werkstoffbasis SBR/NR zunehmend eine herausragende Bedeutung zu.

Bedingt durch die Vulkanisation einer Kautschukmischung der oben genannten Art erfährt der Fördergurt die erforderlichen elastischen Eigenschaften.

Als eingebettete Zugträger kommen in Fördergurtlängsrichtung verlaufende Seile aus Stahl oder Aramid zum Einsatz, wobei Seile aus Stahl von besonderer Bedeutung sind. Insbesondere in Verbindung mit Stahlseilfördergurten wird zwecks Schlitzschutz zusätzlich eine in der tragseitigen und/oder laufseitigen Deckplatte eingebettete Querarmierung aus Synthesecorden, beispielsweise aus Polyamid (PA), verwendet (WO 2008/034483 A1).

In die tragseitige und/oder laufseitige Deckplatte können zudem noch folgende Bauteile eingebettet sein: Leiterschleifen, Transponder, Barcodes, eine Polymermatrix mit eingemischten detektierbaren Teilchen oder andere detektierbare Elemente. Diesbezüglich wird insbesondere auf folgende Patentliteratur verwiesen:
DE 44 44 264 C1
DE 197 15 703 A1
DE 10 2005 054 481 A1
WO 02/40 384 A1

Im Folgenden wird nun näher auf die Problematik um den Werkstoff Aramid eingegangen. Aromatische Polyamide, insbesondere Poly(p-phenylentherephthalamide), kurz Aramide genannt, werden seit Jahrzenten als Zugträgermaterial, vor allem als Stengelketten- oder Cord-Gewebe in Verbindung mit anderen Faserstoffen, in Fördergurten verwendet. Allerdings ist Aramid wegen qualitativer Nachteile bisher nur für spezielle Anwendungen eingesetzt worden. Insbesondere die hohe Druckempfindlichkeit ist ein Nachteil beim Einsatz im rauen Betrieb von Fördergurten. Ferner sind besondere Vorkehrungen bei der Verbindungsherstellung wegen der geringen UV-Beständigkeit, die zu einem hohen Festigkeitsverlust führt, erforderlich.

Das Dokument GB 2 048 773 A offenbart einen Fördergurt nach dem Oberbegriff des Anspruchs 1. u.a. sollte die Kurvengängigkeit des Fördergurts erhöht werden. Die Aufgabe der Erfindung besteht nun darin, die Vorteile des Aramids, nämlich geringes Gewicht, Korrosionsbeständigkeit und hohe Flexibiltät, zu nutzen, und zwar zur Bildung von Hochleistungsfördergurten, und zwar im Rahmen vielseitiger Streckenführungen.

Gelöst wird diese Aufgabe durch einen Fördergurt gemäss Anspruch 1.

Die Anzahl der parallel angeordneten Seile, die zumeist in einer einzigen Ebene zu liegen kommen, sind von der Breite des Fördergurtes abhängig. Weist beispielsweise ein Fördergurt 100 Seile auf, so können alle 100 Seile jeweils aus einem Stahl-Aramid-Hybridseil bestehen. Alternativ hierzu ist es auch möglich, nur eine Gruppe von Zugträgerseilen, beispielsweise 30 Seile jeweils als Stahl-Aramid-Hybridseile auszubilden. Dies hängt von der Konstellation einer Förderanlage ab, wobei im Folgenden drei Zugträgervarianten eines Fördergurtes vorgestellt werden.

### - Zugträgervariante I

Der Zugträger erfasst die zwei Randbereiche und den Mittenbereich des Fördergurtes, wobei jedes Seil als Stahl-Aramid-Hybridseil ausgebildet ist.

Dies ist bei einer einfachen Streckenführung, insbesondere bei einem im Wesentlichen Geradelauf der Förderanlage, der Fall. Hier sind gleichmäßige Zugkräfte gefordert.

### - Zugträgervariante II

Der Zugträger erfasst die zwei Randbereiche und den Mittenbereich des Fördergurtes, wobei jedes Seil der zwei Randbereiche oder des Mittenbereiches als Stahl-Aramid-Hybrid-Seil ausgebildet ist. Hierzu folgende zwei Beispiele:
- Beispiel 1:: Der Zugträger des Mittenbereiches besteht nach dem Stand der Technik aus Stahlseilen. Der Zugträger der beiden Randbereiche ist dagegen mit den Stahl-Aramid-Hybridseilen ausgestattet.
- Beispiel 2:: Der Zugträger des Mittenbereichen besteht aus den Stahl-Aramid-Hybridseilen. Der Zugträger der beiden Randbereiche besteht dagegen nach dem Stand der Technik aus Stahlseilen oder Aramidseilen.

Dieses Konzept kommt insbesondere bei kurvengängigen Fördergurten oder Rohrfördergurten zur Anwendung. Hinsichtlich der unterschiedlichen Zugträgerkonstellationen wird insbesondere auf die Patentschrift EP 0 336 385 B1 verwiesen, wonach durch ein unterschiedliches Zugträgerkonzept in den beiden Randbereichen im Vergleich zum Mittenbereich die Überlappung eines gemuldeten Fördergurtes unter Ausbildung eines Rohrfördergurtes erleichtert wird.

### - Zugträgervariante III

Nach einer neueren Entwicklung (DE 10 2010 000 588.6), betreffend einen kurvengängigen Fördergurt, erfasst der Zugträger ausschließlich den Mittenbereich des Fördergurtes. Bei dieser Zugträgervariante wird nun jedes Seil des Mittenbereiches als Stahl-Aramid-Hybridseil ausgebildet.

Außerdem ist bei diesem Zugträgerkonzept wenigstens innerhalb der zwei Randbereiche des Fördergurtes ein dehnungsfähiges Gewebe oder in Fördergurtquerrichtung verlaufende dehnungsfähige Einzelcorde aus jeweils einem textilen Werkstoff in der tragseitigen und/oder laufseitigen Deckplatte des Fördergurtes eingebettet.

Unabhängig von den oben genannten drei Zugträgervarianten sind hinsichtlich eines Stahl-Aramid-Hybridseiles noch folgende vorteilhafte Ausgestaltungen zu nennen:
- Das Aramidseil liegt in einer Cordkonstruktion vor oder ist als Draht ausgebildet. Von besonderer Bedeutung ist dabei die Cordkonstruktion.
- Das Stahlseil ist aus Stahlcorden oder Stahllitzen gebildet.
- Innerhalb eines Zugträgerseiles bilden wenigstens zwei Stahl-Aramid-Hybridseile einen Gesamtseilverbund in einer Cordkonstruktion.

Die Erfindung wird nun anhand von Ausführungsbeispielen unter Bezugnahme auf schematische Zeichnungen erläutert. Es zeigen:
- Fig. 1: den Querschnitt eines Fördergurtes mit einem Zugträger, der die zwei Randbereiche und den Mittenbereich des Fördergurtes erfasst;
- Fig. 2: den Querschnitt eines Fördergurtes mit einem Zugträger, der ausschließlich den Mittenbereich des Fördergurtes erfasst;
- Fig. 3: den Querschnitt des Aufbaus eines Stahl-Aramid-Hybridseiles;
- Fig. 4: den Gesamtseilverbund in Cordkonstruktion, gebildet aus mehreren Stahl-Aramid-Hybridseilen.

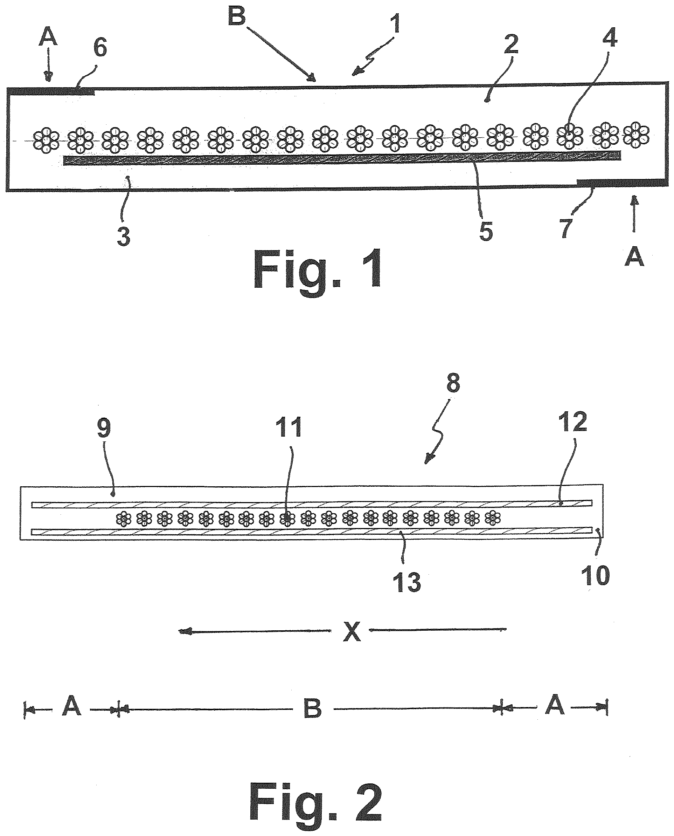

Fig. 1 zeigt einen Fördergurt 1 mit einer tragseitigen Deckplatte 2 für das Fördermaterial und einer laufseitigen Deckpatte 3 aus jeweils einem polymeren Werkstoff mit elastischen Eigenschaften, beispielsweise aus einer vulkanisierten Kautschukmischung auf der Basis von CR. In den Fördergurt 1 ist ein Zugträger 4 in Form von mehreren in Fördergurtlängsrichtung parallel verlaufenden Seilen eingebettet. Der Zugträger 4 erfasst dabei die zwei Randbereiche A und den Mittenbereich B des Fördergurtes 1. Innerhalb der laufseitigen Deckplatte 3 ist noch eine Synthesecord-Querarmierung 5, insbesondere aus PA, eingebettet.

Durch Überlappung der beiden Gurtflanken 6 und 7 innerhalb der beiden Randbereiche A des Fördergurtes 1, zumeist unter Einsatz einer Niederhalterolle, kann sich ein Rohrfördergurt bilden (EP 0 336 385 B1).

Nach der Zugträgervariante I können nun alle Seile des Zugträgers 4 aus einem Stahl-Aramid-Hybridseil bestehen.

Nach der Zugträgervariante II ist es auch möglich, beispielsweise die Seile der beiden Randbereiche A aus Stahl-Aramid-Hybridseilen zu bilden. Die Seile des Mittenbereiches B sind dagegen Stahlseile.

Fig. 2 zeigt einen Fördergurt 8 mit einer tragseitigen Deckplatte 9 und einer laufseitigen Deckplatte 10 aus ebenfalls jeweils einem polymeren Werkstoff mit elastischen Eigenschaften, beispielsweise aus einer vulkanisierten Kautschukmischung auf der Basis von SBR/NR. In den Fördergurt 8 ist ein Zugträger 11 in Form von mehreren in Fördergurtlängsrichtung parallel verlaufenden Seilen eingebettet, die hier ausschließlich innerhalb des Mittenbereiches B des Fördergurtes 8 angeordnet sind. In der tragseitigen und laufseitigen Deckplatte 9 bzw. 10 sind jeweils in Fördergurtquerrichtung X verlaufende Quercorde 12 und 13 aus einem dehnungsfähigen textilen Werkstoff, insbesondere aus PA, eingebettet. Über die gesamte Fördergurtlängsrichtung hinweg sind diese Quercorde 12 und 13 als Einzelcorde, die in einem Abstand zueinander angeordnet sind, vorhanden. Diese Quercorde 12 und 13 erstrecken sich im Wesentlichen über die gesamte Fördergurtbreite, umfassend die beiden Randbereiche A und den Mittenbereich B. Diese Quercorde erfüllen im Zusammenhang mit den ausschließlich im Mittenbereich des Fördergurtes 8 angeordneten Seilen die Anforderung an die Kurvengängigkeit. Darüber hinaus dienen diese Quercorde 12 und 13 auch dem Schlitzschutz.

Im Rahmen der erfindungsgemäßen Weiterentwicklung sind die ausschließlich im Mittenbereich B angeordneten Seile Stahl-Aramid-Hybridseile.

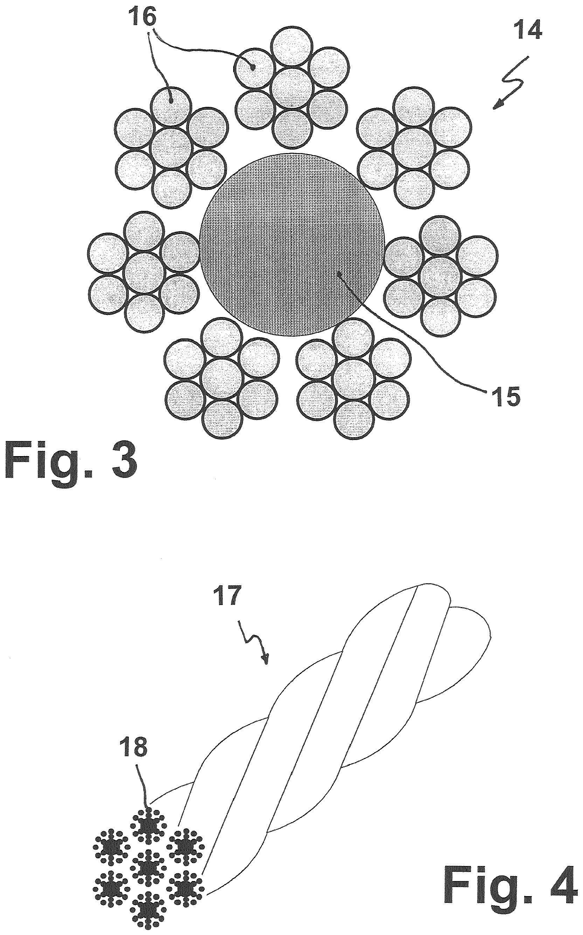

Fig. 3 zeigt ein Stahl-Aramid-Hybridseil 14 mit einem zentrisch angeordneten Aramidseil 15, das von Stahlseilen 16 in einer Cordkonstruktion umhüllt ist. Das hier schematisch dargestellte Aramidseil 15 liegt zumeist ebenfalls in einer Cordkonstruktion vor.

Fig. 4 zeigt ein Zugträgerseil 17 als Gesamtseilverbund in einer Cordkonstruktion. Dieses Zugträgerseil 17 ist aus sieben Stahl-Aramid-Hybridseilen 18 als Einzelseile gebildet.

Im Folgenden werden die wesentlichen Vorteile des erfindungsgemäßen Fördergurtes zusammengetragen:
- In der Bauart eines Stahl-Aramid-Hybridseiles können die Vorteile von Aramid, also geringes Gewicht, Korrosionsbeständigkeit und höhere Flexibilität, genutzt werden, weil das Aramidseil durch das außen liegende Stahlseil gegen Druck geschützt ist.
- Das umhüllende Stahlseil, gebildet von Stahlcorden oder Stahllitzen, kann bei einem Bruch des Aramidseiles die Zugkräfte aufnehmen und so einen drohenden Riss des Fördergurtes verhindern.
- Der Einsatz eines Stahl-Aramid-Hybridseiles führt zu einem geringeren Gurtgewicht, verbunden mit einem geringeren Energiebedarf, dem Einsatz kleinerer Antriebs- und Umkehrtrommeln, niedrigerer Anlagekosten und schließlich einer längeren Lebensdauer.

### Bezugszeichenliste

### (Teil der Beschreibung)

- 1: Fördergurt
- 2: tragseitige Deckplatte
- 3: laufseitige Deckplatte
- 4: Zugträger
- 5: Synthesecord-Querarmierung
- 6: Gurtflanke
- 7: Gurtflanke
- 8: Fördergurt
- 9: tragseitige Deckplatte
- 10: laufseitige Deckplatte
- 11: Zugträger
- 12: Quercorde als Einzelcorde
- 13: Quercorde als Einzelcorde
- 14: Stahl-Aramid-Hybridseil
- 15: Aramidseil
- 16: Stahlseil
- 17: Zugträgerseil als Gesamtseilverbund in Cordkonstruktion
- 18: Stahl-Aramid-Hybridseil als Einzelseil eines Gesamtseilverbundes
- A: Randbereich des Fördergurtes
- B: Mittenbereich des Fördergurtes
- X: Fördergurtquerrichtung

## Patentansprüche

1. Fördergurt (1, 8) mit einer tragseitigen Deckplatte (2, 9) und einer laufseitigen Deckplatte (3, 10) aus jeweils einem polymeren Werkstoff mit elastischen Eigenschaften sowie einem eingebetteten Zugträger (4, 11) in Form von in Fördergurtlängsrichtung parallel verlaufenden Seilen (17), wobei der Fördergurt (1, 8) über seine gesamte Breite hinweg zwei Randbereiche (A) und einen Mittenbereich (B) umfasst, wobei der Zugträger (4, 11) vollständig oder teilweise aus Stahl-Aramid-Hybridseilen (14, 18) besteht, wobei ein Hybridseil ein zentrisch angeordnetes Aramidseil (15), das von Stahlseilen(16) umhüllt ist, umfasst, und wobei der Zugträger (11) ausschließlich den Mittenbereich (B) des Fördergurtes (8) erfasst, wobei jedes Seil (17) des Mittenbereiches (B) als Stahl-Aramid-Hybridseil (14, 18) ausgebildet ist, **dadurch gekennzeichnet, dass** wenigstens innerhalb der zwei Randbereiche (A) des Fördergurtes (8) ein dehnungsfähiges Gewebe oder in Fördergurtquerrichtung (X) verlaufende dehnungsfähige Quercorde (12, 13) als Einzelcorde aus jeweils einem textilen Werkstoff in der tragseitigen Deckplatte (9) und/oder laufseitigen Deckplatte (10) des Fördergurtes (8) eingebettet ist.

2. Fördergurt nach Anspruch 1, **dadurch gekennzeichnet, dass** der Zugträger (4) die zwei Randbereiche (A) und den Mittenbereich (B) des Fördergurtes (1) erfasst, wobei jedes Seil (17) als Stahl-Aramid-Hybridseil (14, 18) ausgebildet ist.

3. Fördergurt nach Anspruch 1, **dadurch gekennzeichnet, dass** der Zugträger (4) die zwei Randbereiche (A) und den Mittenbereich (B) des Fördergurtes (4) erfasst, wobei jedes Seil (17) der zwei Randbereiche (A) oder des Mittenbereiches (B) als Stahl-Aramid-Hybridseil (14, 18) ausgebildet ist.

4. Fördergurt nach einem der Ansprüche 1 bis 3, **dadurch gekennzeichnet, dass** das Aramidseil (15) in einer Cordkonstruktion vorliegt.

5. Fördergurt nach einem der Ansprüche 1 bis 3, **dadurch gekennzeichnet, dass** das Aramidseil (15) als Draht ausgebildet ist.

6. Fördergurt nach einem der Ansprüche 1 bis 5, **dadurch gekennzeichnet, dass** jedes Stahlseil (16) aus einem Stahlcord gebildet ist.

7. Fördergurt nach einem der Ansprüche 1 bis 5, **dadurch gekennzeichnet, dass** jedes Stahlseil (16) aus Stahllitzen gebildet ist.

8. Fördergurt nach einem der Ansprüche 1 bis 7, **dadurch gekennzeichnet, dass** innerhalb eines Zugträgerseiles (17) wenigstens zwei Stahl-Aramid-Hybridseile (14, 18) einen Gesamtseilverbund in einer Cordkonstruktion bilden.

## Claims

1. Conveyor belt (1, 8) with a carrying-side cover sheet (2, 9) and a running-side cover sheet (3, 10) each made from a polymeric material with elastic properties and with an embedded tension member (4, 11) in the form of cables (17) running parallel in the longitudinal direction of the conveyor belt, wherein the conveyor belt (1, 8) comprises over its overall width two peripheral regions (A) and a central region (B), wherein the tension member (4, 11) consists completely or partially of steel-aramid hybrid cables (14, 18), wherein a hybrid cable comprises a centrally arranged aramid cable (15) which is enveloped by steel cables (16), and wherein the tension member (11) exclusively takes up the central region (B) of the conveyor belt (8), wherein each cable (17) of the central region (B) is formed as a steel-aramid hybrid cable (14, 18), **characterized in that**, at least within the two peripheral regions (A) of the conveyor belt (8), a stretchable fabric or stretchable transverse cords (12, 13) that extend in the transverse direction (X) of the conveyor belt and take the form of individual cords each made from textile material, is/are embedded in the carrying-side cover sheet (9) and/or running-side cover sheet (10) of the conveyor belt (8).

2. Conveyor belt according to Claim 1, **characterized in that** the tension member (4) takes up the two peripheral regions (A) and the central region (B) of the conveyor belt (1), wherein each cable (17) is formed as a steel-aramid hybrid cable (14, 18).

3. Conveyor belt according to Claim 1, **characterized in that** the tension member (4) takes up the two peripheral regions (A) and the central region (B) of the conveyor belt (4), wherein each cable (17) of the two peripheral regions (A) or of the central region (B) is formed as a steel-aramid hybrid cable (14, 18).

4. Conveyor belt according to one of Claims 1 to 3, **characterized in that** the aramid cable (15) is of a cord construction.

5. Conveyor belt according to one of Claims 1 to 3, **characterized in that** the aramid cable (15) is formed as a wire.

6. Conveyor belt according to one of Claims 1 to 5, **characterized in that** each steel cable (16) is formed from a steel cord.

7. Conveyor belt according to one of Claims 1 to 5, **characterized in that** each steel cable (16) is formed from stranded steel wires.

8. Conveyor belt according to one of Claims 1 to 7, **characterized in that**, within a tension-member cable (17), at least two steel-aramid hybrid cables (14, 18) form an overall cable assembly of a cord construction.

## Revendications

1. Courroie de convoyeur (1, 8) comportant une plaque de recouvrement du côté porteur (2, 9) et une plaque de recouvrement du côté porté (3, 10) respectivement en un matériau polymère possédant des propriétés élastiques ainsi qu'un support de traction incorporé (4, 11) sous forme de câbles (17) s'étendant parallèlement dans la direction longitudinale de la courroie de convoyeur, dans laquelle la courroie de convoyeur (1, 8) comprend sur toute sa largeur deux régions de bord (A) et une région centrale (B), dans laquelle le support de traction (4, 11) se compose entièrement ou partiellement de câbles hybrides en acier-aramide (14, 18), dans laquelle un câble hybride comprend un câble en aramide (15) disposé au centre, qui est entouré par des câbles en acier (16), et dans laquelle le support de traction (11) occupe exclusivement la région centrale (B) de la courroie de convoyeur (8), dans laquelle chaque câble (17) de la région centrale (B) est réalisé sous forme de câble hybride en acier-aramide (14, 18), **caractérisée en ce que**, au moins à l'intérieur des deux régions de bord (A) de la courroie de convoyeur (8), un tissu extensible ou des cordes transversales extensibles (12, 13) agencées dans la direction transversale (X) de la courroie de convoyeur sous forme de cordes individuelles chaque fois en un matériau textile est incorporé/sont incorporées dans la plaque de recouvrement du côté porteur (9) et/ou dans la plaque de recouvrement du côté porté (10) de la courroie de convoyeur (8).

2. Courroie de convoyeur selon la revendication 1, **caractérisée en ce que** le support de traction (4) occupe les deux régions de bord (A) et la région centrale (B) de la courroie de convoyeur (1), dans laquelle chaque câble (17) est constitué par un câble hybride en acier-aramide (14, 18).

3. Courroie de convoyeur selon la revendication 1, **caractérisée en ce que** le support de traction (4) occupe les deux régions de bord (A) et la région centrale (B) de la courroie de convoyeur (4), dans laquelle chaque câble (17) des deux régions de bord (A) ou de la région centrale (B) est constitué par un câble hybride en acier-aramide (14, 18).

4. Courroie de convoyeur selon l'une quelconque des revendications 1 à 3, **caractérisée en ce que** le câble en aramide (15) est présent dans une construction de corde.

5. Courroie de convoyeur selon l'une quelconque des revendications 1 à 3, **caractérisée en ce que** le câble en aramide (15) est réalisé sous forme de fil.

6. Courroie de convoyeur selon l'une quelconque des revendications 1 à 5, **caractérisée en ce que** chaque câble en acier (16) est formé d'une corde en acier.

7. Courroie de convoyeur selon l'une quelconque des revendications 1 à 5, **caractérisée en ce que** chaque câble en acier (16) est formé de torons en acier.

8. Courroie de convoyeur selon l'une quelconque des revendications 1 à 7, **caractérisée en ce qu'**au moins deux câbles hybrides en acier-aramide (14, 18) forment un composite de câble total dans une construction de corde à l'intérieur d'un câble de support de traction (17).
